(19) Europäisches Patentamt
European Patent Office
Office européen des brevets

(11) **EP 2 750 922 B1**

(12) **EUROPÄISCHE PATENTSCHRIFT**

(45) Veröffentlichungstag und Bekanntmachung des Hinweises auf die Patenterteilung:
**19.08.2020 Patentblatt 2020/34**

(21) Anmeldenummer: **12759363.0**

(22) Anmeldetag: **28.08.2012**

(51) Int Cl.:
*B60L 53/14* (2019.01)       *B60L 53/00* (2019.01)
*B60L 3/00* (2019.01)

(86) Internationale Anmeldenummer:
**PCT/EP2012/003603**

(87) Internationale Veröffentlichungsnummer:
**WO 2013/029774 (07.03.2013 Gazette 2013/10)**

(54) **VERFAHREN UND VORRICHTUNG ZUM LADEN EINES ENERGIESPEICHERS EINES FAHRZEUGS**

METHOD AND DEVICE FOR CHARGING AN ENERGY STORAGE OF A VEHICLE

PROCÉDÉ ET DISPOSITIF PERMETTANT DE CHARGER UN ACCUMULATEUR D'ÉNERGIE DANS UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.08.2011 DE 102011111993**

(43) Veröffentlichungstag der Anmeldung:
**09.07.2014 Patentblatt 2014/28**

(73) Patentinhaber: **Volkswagen Aktiengesellschaft 38440 Wolfsburg (DE)**

(72) Erfinder:
• **STICHOWSKI, Torsten 39106 Magdeburg (DE)**
• **OTT, Bernhard 38162 Cremlingen (DE)**
• **KELLER, Michael 10437 Berlin (DE)**

(56) Entgegenhaltungen:
**EP-A1- 2 309 617       CA-A1- 2 648 972
US-A1- 2011 163 716**

## Beschreibung

Die vorliegende Erfindung betrifft ein Verfahren und eine Vorrichtung, um einen Energiespeicher eines Fahrzeugs über eine von extern zugeführte Spannung zu laden.

Die US 2011/163716 A1 beschreibt ein Fahrzeug mit einer Traktionsbatterie und einer Batterieladeeinrichtung. Wenn die Batterieladeeinrichtung mit einer elektrischen Spannungsquelle verbunden ist, stellt die Batterieladeeinrichtung der Traktionsbatterie einen Strom mit einem Sollwert zur Verfügung, der abhängig von der Temperatur der Batterieladeeinrichtung variiert. Dabei kann die Batterieladeeinrichtung einen Sollwert für eine Ausgangsspannung und für einen Ausgangsstrom steuern. Darüber hinaus kann die Batterieladeeinrichtung bestimmen, ob ihr aktueller Ladezustand gleich einem Zielladezustand ist.

Die EP 2 309 617 A1 offenbart ein Ladesystem für ein Fahrzeug, um eine Energiespeichervorrichtung des Fahrzeugs mit einer von einer externen Energiequelle zugeführten Energie zu laden. Dabei wird der Ladevorgang der Energiespeichervorrichtung abhängig von einer Spannung und einem Strom der externen Energiequelle gesteuert.

Die CA 2 648 972 A1 beschreibt ein Laden einer Batterie eines Fahrzeugs mittels einer externen Ladeeinrichtung. Dabei kann ein Umfang eines Stroms und/oder einer Energie, der bzw die der Batterie zugeführt wird, gesteuert werden, indem eine Spannung geändert wird.

Gemäß der DE 195 21 962 A1 wird ein Ladevorgang einer Batterie für ein Elektrofahrzeug gesteuert, indem ein Ladevorgang-Beendigungssignal erzeugt wird, wenn ein Spannungsabfall der Batteriespannung unter eine vorgegebene Spannung auftritt.

Die US 2008/0007202 A1 beschreibt ein Ladesystem für ein Fahrzeug, bei welchem der Beginn der Ladezeit und die Ladezeit bestimmt werden.

Die US 2004/0169489 A1 beschreibt das Laden von Batterien. Dabei wird eine Leerlauf-Spannung gemessen, um ein Leistungsniveau zum Laden zu bestimmen. Dieses Leistungsniveau wird erhöht, bis eine Strom- oder Spannungsgrenze überschritten wird.

Die DE 10 2005 011 081 A1 beschreibt ein Verfahren, um zu erkennen, ob eine externe Spannung an einem Akkumulator anliegt, wozu in Zeitabständen die Akkumulatorspannung vom Ausgang des Akkumulators getrennt wird.

Die DE 35 28 476 A1 offenbart das Laden einer Traktionsbatterie. Um eine Ladekennlinie zu befolgen, werden dabei Ladestrom und Ladespannung gemessen.

Wenn ein Fahrer eines Elektrofahrzeugs eine Hochvolt-Batterie seines Fahrzeugs an einer ihm fremden Ladeeinrichtung lädt, muss der Fahrer den Ladestrom begrenzen, um eine Beschädigung der Ladeeinrichtung z.B. aufgrund einer zu hohen Wärmeentwicklung während des Ladevorgangs zu vermeiden. Wenn der Fahrer ein Ladestrommaximum, welches den maximalen von der Ladeeinrichtung zu erzeugenden Ladestrom definiert, nicht in Erfahrung bringen kann, muss der Fahrer aus Sicherheitsgründen das Fahrzeug mit einem möglichst geringen Ladestrom laden, wodurch sich nachteiligerweise der Ladevorgang entsprechend verlängert.

Daher stellt sich die vorliegende Erfindung die Aufgabe, den Ladevorgang auch mittels einer unbekannten fremden Ladeeinrichtung in möglichst geringer Zeit durchzuführen.

Erfindungsgemäß wird diese Aufgabe durch ein Verfahren zum Laden eines Energiespeichers eines Fahrzeugs nach Anspruch 1, durch eine Vorrichtung zum Laden eines Energiespeichers eines Fahrzeugs nach Anspruch 6 oder durch ein Fahrzeug nach Anspruch 8 gelöst. Die abhängigen Ansprüche definieren bevorzugte und vorteilhafte Ausführungsformen der vorliegenden Erfindung.

Im Rahmen der vorliegenden Erfindung wird ein Verfahren zum Laden eines Energiespeichers eines Fahrzeugs über eine Ladeeinrichtung bereitgestellt. Dabei wird eine von der Ladeeinrichtung bereitgestellte Spannung, insbesondere eine Wechselspannung, an einem Anschluss des Fahrzeugs gemessen. Ein Ladestrom, welcher von der Ladeeinrichtung bereitgestellt wird und mit welchem der Energiespeicher geladen wird, wird abhängig von der gemessenen Spannung derart eingestellt, dass die Verlustleistung beim Laden beschränkt wird.

Indem die Verlustleistung beim Laden beschränkt wird, wird beispielsweise auch die Wärmeentwicklung aufgrund der Verlustleistung bei der Ladeeinrichtung oder im Fahrzeug entsprechend beschränkt. Wenn beispielsweise ein Schwellenwert für die Verlustleistung entsprechend gesetzt wird, und der Ladestrom derart eingestellt wird, dass die Verlustleistung beim Laden unter diesem Schwellenwert bleibt, kann die Wärmeentwicklung entsprechend beschränkt werden, wodurch bei geeigneter Wahl des Schwellenwerts vorteilhafterweise eine Beschädigung der Ladeeinrichtung oder des Fahrzeugs vermieden wird und dennoch ein entsprechend großer Ladestrom (abhängig von dem Schwellenwert) erzeugt wird, um den Energiespeicher in angemessener Zeit zu laden.

Unter einer Ladeeinrichtung wird dabei eine Einrichtung verstanden, welche dem Fahrzeug eine Spannung zur Verfügung stellt. Dabei kann es sich auch um eine normale Steckdose handeln.

Dabei wird die Spannung an dem Anschluss in einem unbelasteten Zustand der Ladeeinrichtung als Ruhespannung gemessen. Beim Laden des Energiespeichers wird die aktuell an dem Anschluss anliegende Spannung, welche sich abhängig von dem Ladestrom einstellt, gemessen. Anschließend wird eine Differenz aus der Ruhespannung und der aktuell an dem Anschluss gemessenen Spannung bestimmt und der Ladestrom abhängig von dieser Differenz geregelt oder eingestellt.

Der unbelastete Zustand der Ladeeinrichtung liegt dabei dann vor, wenn der Ladestrom gleich Null ist. Die Verlustleistung, welche sich aufgrund des Ladens bei der Ladeeinrichtung und/oder im Fahrzeug ergibt, hängt von dem Produkt aus der Differenz (Spannungsdifferenz) und dem Ladestrom ab. Indem diese Differenz durch eine entsprechende Regelung oder Einstellung des Ladestroms entsprechend gering gehalten wird, wird demnach auch die Verlustleistung bei der Ladeeinrichtung entsprechend gering gehalten.

Die Messung der Ruhespannung, d.h. die Messung der Spannung an dem Anschluss des Fahrzeugs im unbelasteten Zustand, kann in vorbestimmten zeitlichen Abständen wiederholt werden, um Schwankungen der von der Ladeeinrichtung bereitgestellten Spannung berücksichtigen zu können.

Indem die Messung der Ruhespannung in zeitlichen Abständen wiederholt wird, werden Spannungsschwankungen der Ladeeinrichtung bei der Regelung des Ladestroms vorteilhafterweise derart berücksichtigt, dass trotz dieser Spannungsschwankungen die Verlustleistung auf ein Optimum geregelt oder zumindest unter einem Schwellenwert gehalten werden kann.

Gemäß einer erfindungsgemäßen Ausführungsform wird ein Verhältnis V aus der Differenz dU der Ruhespannung $U_R$ und der aktuell an dem Anschluss gemessenen Spannung U zu der Ruhespannung $U_R$ gemäß folgender Gleichung (1) bestimmt.

$$V = \frac{dU}{U_R} = \frac{U_R - U}{U_R} \tag{1}$$

Dabei wird der Ladestrom derart eingestellt, dass dieses Verhältnis V in einem Bereich von 1 % bis 5 %, am besten bei 3 % gehalten wird. Dabei gilt, dass die Differenz aus der Ruhespannung und der aktuell an dem Anschluss gemessenen Spannung umso größer ist, umso größer der Ladestrom eingestellt wird.

Wenn das Verhältnis V bei einem bestimmten Prozentsatz gehalten wird, bedeutet dies, dass die an dem Anschluss aktuell gemessene Spannung gegenüber der Ruhespannung um diesen Prozentsatz eingebrochen ist. Laut der VDE-Norm 0100 ist beispielsweise der Prozentsatz von 3 % gerade noch als ein zulässiger Spannungseinbruch definiert.

Wenn die an dem Anschluss gemessene Spannung unter einen vorbestimmten Spannungsschwellenwert fällt, wird insbesondere der Ladestrom auf 0 abgeregelt bzw. der Ladevorgang unterbrochen.

Dadurch ist sichergestellt, dass das Laden sofort beendet wird, wenn die Wechselspannung an dem Anschluss beim Laden zu stark absinkt, wodurch ein Überhitzen der Einrichtung beim Laden ausgeschlossen ist. Der vorbestimmte Spannungsschwellenwert kann dabei beispielsweise derart gewählt werden, dass er in einem Bereich von 90 % bis 95 % der Ruhespannung liegt. Falls dieser Fall auftritt, dass die gemessene Spannung unter den Spannungsschwellenwert fällt und der Ladevorgang unterbrochen wird, kann z.B. der Fahrer darüber informiert werden.

Gemäß einer weiteren erfindungsgemäßen Ausführungsform wird ein Ladestrompuls erzeugt und während der Erzeugung dieses Ladestrompulses ein zeitlicher Verlauf der Spannung an dem Anschluss erfasst. Abhängig von dem Verlauf dieser Spannung und abhängig von Eigenschaften dieses Ladestrompulses (z.B. Maximalwert, zeitliche Dauer) kann dann ein Leitungswiderstand insbesondere innerhalb der Ladeeinrichtung bestimmt werden. Der Ladestrom wird dann abhängig von diesem derart ermittelten Leitungswiderstand derart eingestellt, dass die Verlustleistung innerhalb der Ladeeinrichtung auf ein Optimum geregelt wird.

Beispielsweise kann ein Widerstand R mit folgender Gleichung (2) berechnet werden.

$$R = \frac{dU}{I} \tag{2}$$

Dabei entspricht I der Amplitude des Strompulses und dU ist die (maximale) Spannungsdifferenz, welche aufgrund des erzeugten Strompulses auftritt.

Der errechnete Widerstand R wird dann mit einem Standardwiderstandswert SR verglichen, welcher mit folgender Gleichung (3) berechnet werden kann.

$$SR = \frac{\rho \times l}{A} \tag{3}$$

Dabei ist p der spezifische Widerstand (Einheit [$\Omega mm^2/m$]), l die Leitungslänge und A der Leitungsquerschnitt eines Ladungskabels, über welches der Energiespeicher geladen wird.

Der errechnete Widerstand wird mit dem Standardwiderstand verglichen und der Ladestrom abhängig von diesem Vergleich eingestellt. Insbesondere sollte der Ladestrom derart eingestellt werden, dass der errechnete Widerstand multipliziert mit einem vorbestimmten Faktor (z.B. 1,01 bis 1,4) nicht größer der Standardwiderstand ist (z.B. wenn die Amplitude des Ladestroms der Amplitude des Strompulses entspricht).

Es wird wird auch ein weiteres Verfahren zum Laden eines Energiespeichers eines Fahrzeugs bereitgestellt. Gemäß diesem Verfahren wird die Verlustleistung beim Laden des Energiespeichers bestimmt und der Ladestrom beim Laden des Energiespeichers in Abhängigkeit von dieser Verlustleistung eingestellt.

Auch dieses weitere Verfahren ermöglicht es, den Ladestrom derart einzustellen, dass die Verlustleistung innerhalb der Ladeeinrichtung auf ein Optimum geregelt wird.

Die Verlustleistung innerhalb der Ladeeinrichtung auf ein Optimum zu regeln, bedeutet im Rahmen dieser Erfindung insbesondere, dass die Verlustleistung derart eingestellt wird, dass ein Spannungseinbruch der von der Ladeeinrichtung an dem Anschluss des Fahrzeugs bereitgestellten Spannung möglichst genau einem vorbestimmten Prozentsatz (welcher beispielsweise in einem Bereich von 1 % bis 5 %, am besten bei 3 %, liegt) entspricht (vergleiche Gleichung (1) oben).

Im Rahmen der vorliegenden Erfindung wird auch eine Vorrichtung zum Laden eines Energiespeichers eines Fahrzeugs über eine externe Ladeeinrichtung bereitgestellt. Die Vorrichtung umfasst Steuermittel, einen Spannungsmesser und einen Stromregler. Mit Hilfe des Spannungsmessers wird eine von der Ladeeinrichtung an einem Anschluss des Fahrzeugs bereitgestellte Spannung gemessen. Ein Ladestrom, welcher von der Ladeeinrichtung erzeugt wird und den Energiespeicher lädt, wird abhängig von der gemessenen Spannung mittels der Steuermittel und des Stromreglers derart eingestellt, dass eine Verlustleistung insbesondere innerhalb der Ladeeinrichtung beim Laden beschränkt wird.

Es wird wird auch eine weitere Vorrichtung zum Laden eines Energiespeichers eines Fahrzeugs bereitgestellt. Diese weitere Vorrichtung umfasst Steuermittel und einen Stromregler. Mit Hilfe der Steuermittel wird beim Laden des Energiespeichers eine Verlustleistung insbesondere der Ladeeinrichtung bestimmt. Mit Hilfe der Steuermittel und des Stromreglers wird ein Ladestrom beim Laden des Energiespeichers in Abhängigkeit von dieser Verlustleistung eingestellt.

Die Vorteile der erfindungsgemäßen Vorrichtung und der weiteren Vorrichtung entsprechen im Wesentlichen den Vorteilen des erfindungsgemäßen Verfahrens und des weiteren Verfahrens, welche vorab im Detail ausgeführt sind, so dass hier auf eine Wiederholung verzichtet wird.

Im Rahmen der vorliegenden Erfindung wird auch ein Fahrzeug bereitgestellt, welches eine erfindungsgemäße Vorrichtung umfasst.

Die vorliegende Erfindung weist folgende Vorteile auf:

- Die Erfindung ermöglicht eine aktive Überwachung der Wechselspannung an dem Anschluss des Fahrzeugs beim Ladevorgang, so dass beispielsweise bei einem zu starken Spannungseinbruch der Ladevorgang sofort abgebrochen werden kann.
- Die Erfindung ermöglicht eine aktive Überwachung der Verlustleistung beim laden, so dass beispielsweise eine zu hohe Verlustleistung vermieden wird.
- Die vorliegende Erfindung bietet einen aktiven Schutz gegenüber einer Überhitzung von Anschlusssteckern oder der Infrastruktur, indem die Verlustleistung entsprechend beschränkt wird.
- Die vorliegende Erfindung ist auch direkt im Fahrzeug einsetzbar, um Fahrzeugkomponenten und Fahrzeugstecker zu überprüfen, indem beim Ladevorgang der Spannungsverlauf überwacht wird und ein zu großer Spannungseinbruch als defekte Fahrzeugkomponente oder defekter Fahrzeugstecker diagnostiziert wird.

Die vorliegende Erfindung ist insbesondere für Elektrofahrzeuge oder Hybridfahrzeuge zum sicheren und dynamischen Laden eines Hochvolt-Energiespeichers geeignet. Selbstverständlich ist diese Erfindung nicht auf diesen bevorzugten Anwendungsbereich beschränkt, da die vorliegende Erfindung beispielsweise auch bei Schiffen, Flugzeugen sowie gleisgebundenen oder spurgeführten Fahrzeugen einsetzbar ist. Darüber hinaus ist die vorliegende Erfindung zumindest prinzipiell auch zum Laden eines Energiespeichers geeignet, welcher sich in einer stationären Einrichtung befindet.

Im Folgenden wird die vorliegende Erfindung anhand von erfindungsgemäßen Ausführungsformen mit Bezug zu den Figuren im Detail beschrieben.

Figuren 1 und 2 stellen jeweils gemäß einer erfindungsgemäßen Variante einen Spannungsverlauf und einen Stromverlauf beim Laden eines Energiespeichers dar.

In Fig. 3 ist ein erfindungsgemäßes Fahrzeug mit einer erfindungsgemäßen Vorrichtung dargestellt.

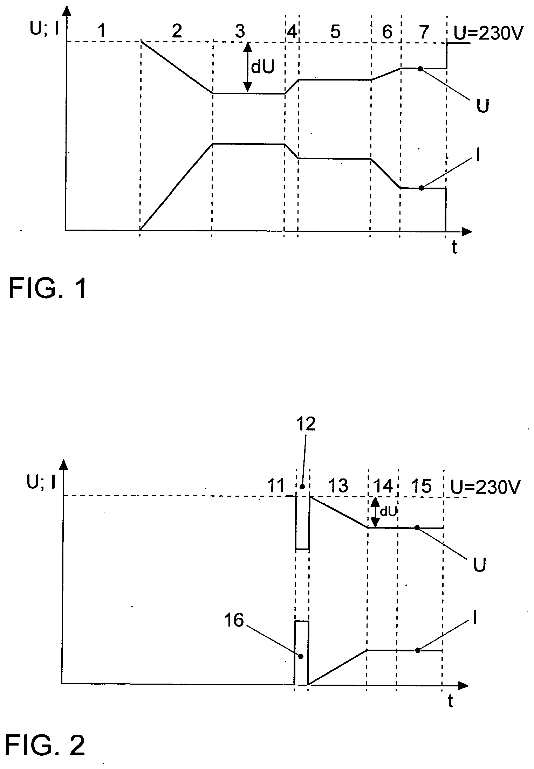

In Fig. 1 sind ein Stromverlauf I und ein Spannungsverlauf U über der Zeit t bei einem erfindungsgemäßen Laden eines Energiespeichers abgebildet. Zu Beginn des Ladevorgangs während des Zeitintervalls 1 ist eine Leitung, über welche der Energiespeicher elektrisch geladen wird, unbelastet, so dass an einem entsprechenden Anschluss des Fahrzeugs eine Ruhespannung von 230 V gemessen wird, während der Ladestrom 0 A beträgt. Der gemessene Wert der Ruhespannung wird im Fahrzeug gespeichert. In dem zweiten Zeitinterval 2 wird der Ladestrom I auf einen Maximalwert erhöht, was dazu führt, dass die an dem Anschluss gemessene Spannung U entsprechend absinkt. In dem dritten Zeitinterval 3 wird der Ladestrom konstant gehalten, so dass auch die an dem Anschluss gemessene Spannung U konstant bleibt. In dem vierten Zeitinterval 4 wird der Ladestrom I reduziert, wodurch die an dem Anschluss gemessene Spannung U wieder ansteigt. Während des fünften Zeitintervalls 5 wird anhand der an dem Anschluss gemessenen Spannung U und anhand des eingestellten Ladestroms I die Verlustleistung errechnet und bewertet. Um die Verlustleistung zu senken, wird während des sechsten Zeitintervalls 6 der Ladestrom I weiter reduziert, wodurch sich zwar die an dem Anschluss gemessene Spannung U erhöht, aber dennoch die Verlustleistung reduziert wird. Ähnlich wie in dem fünften Zeitinterval 5 wird während des siebten Zeitintervalls 7 die Verlustleistung anhand der an dem Anschluss gemessenen Spannung U und anhand des Ladestroms I errechnet und bewertet. Da die Verlustleistung bei diesem beispielhaften Ladevorgang als zu groß angesehen wird, wird der Ladestrom I am Ende des siebten Zeitintervalls 7 abgeschaltet, wodurch sich wieder Ruhespannung von 230 V ergibt.

In Fig. 2 sind ebenfalls ein Stromverlauf I und ein Spannungsverlauf U über der Zeit t bei einem erfindungsgemäßen Laden gemäß einer anderen Variante dargestellt. Ähnlich wie bei der in Fig. 1 dargestellten Variante ist die Leitung zu Beginn des Ladevorgangs während des Zeitintervalls 11 unbelastet, so dass an dem Anschluss des Fahrzeugs die Ruhespannung 230 V anliegt und gemessen werden kann während kein Ladestrom vorhanden ist. Im folgenden Zeitinterval 12 wird ein Ladestrompuls 16 erzeugt, durch welchen sich ein entsprechender pulsförmiger Spannungseinbruch ergibt. Anhand von Eigenschaften des pulsförmigen Spannungseinbruchs zusammen mit Eigenschaften des Ladestrompulses 16 kann ein Leitungswiderstand bestimmt werden, wobei mit Hilfe dieses Leitungswiderstands anschließend die Verlustleistung auf einen optimalen bzw. der Ladestrom auf einen maximal möglichen Wert eingestellt werden kann. Der Leitungswiderstand umfasst dabei einen Widerstand der Wechselstromleitung des Ladestroms sowie Übergangswiderstände von Steckern und Koppelstellen. Im folgenden Zeitinterval 13 wird der Ladestrom I auf diesen berechneten Maximalwert erhöht, wodurch die an dem Anschluss gemessene Spannung U entsprechend absinkt. Die Spannungsdifferenz dU, um welche die Ruhespannung dabei absinkt, entspricht nahezu genau 3 %. Im folgenden Zeitinterval 14 wird der Ladestrom I auf diesem Wert gehalten, so dass auch die Spannung U konstant bleibt. Im Zeitinterval 15 wird der Ladevorgang fortgesetzt.

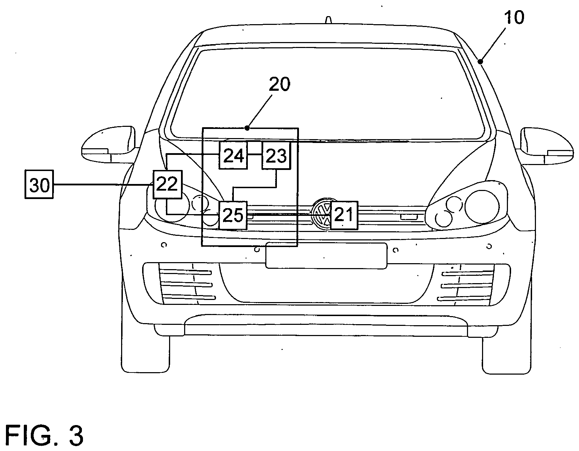

In Fig. 3 ist eine externe Ladeeinrichtung 30 zusammen mit einem an dieser Einrichtung 30 angeschlossenen erfindungsgemäßen Fahrzeug 10 dargestellt. Das Fahrzeug 10 umfasst eine erfindungsgemäße Vorrichtung 20, einen Anschluss 22 zum Anschließen an die Ladeeinrichtung 30 und einen Hochvolt-Energiespeicher 21. Die erfindungsgemäße Vorrichtung 20 umfasst ihrerseits Steuermittel 23, einen Spannungsmesser 24 und einen Stromregler 25.

Mit Hilfe des Spannungsmessers 24 misst die Vorrichtung 20 eine an dem Anschluss 22 anliegende Spannung. Ein Ladestrom, welcher von der Ladeeinrichtung 30 erzeugt wird und mit welchem der Energiespeicher 21 geladen wird, wird abhängig von dieser gemessenen Spannung mit Hilfe des Stromreglers 25 derart eingestellt, dass die Verlustleistung insbesondere der Ladeeinrichtung 30 beim Laden beschränkt oder auf einen optimalen Wert eingestellt wird.

## Patentansprüche

1. Verfahren zum Laden eines Energiespeichers (21) eines Fahrzeugs (10) über eine Ladeeinrichtung (30), wobei eine von der Ladeeinrichtung (30) bereitgestellte Spannung (U) an einem Anschluss (22) des Fahrzeugs (10) gemessen wird, wobei ein Ladestrom (I), welcher von der Ladeeinrichtung (30) bereitgestellt wird und den Energiespeicher (21) lädt, abhängig von der Spannung (U) auf ein Optimum geregelt wird, um die Verlustleistung, welche sich aufgrund des Ladens bei der Ladeeinrichtung (30) und/oder im Fahrzeug (10) ergibt, beim Laden zu beschränken, **dadurch gekennzeichnet, dass** die Spannung (U) an dem Anschluss (22) des Fahrzeugs (10) im unbelasteten Zustand der Ladeeinrichtung (30) als Ruhespannung gemessen wird, wobei im unbelasteten Zustand der Ladeeinrichtung (30) der Ladestrom (I) gleich Null ist, wobei der Ladestrom (I) beim Laden abhängig von einer Differenz (dU) aus der Ruhespannung und der beim Laden aktuell an dem Anschluss (22) des Fahrzeugs (10) gemessenen Spannung (U) geregelt wird, und wobei der Ladestrom (I) beim Laden geregelt wird, um ein Verhältnis aus der Differenz (dU) und der Ruhespannung in einem Bereich von 1% bis 5% zu halten.

2. Verfahren nach Anspruch 1, **dadurch gekennzeichnet, dass** die an dem Anschluss (22) gemessene Spannung eine Wechselspannung (U) ist.

3. Verfahren nach Anspruch 1 oder 2, **dadurch gekennzeichnet, dass** die Messung der Ruhespannung in vorbestimmten zeitlichen Abständen wiederholt wird, um Schwankungen der von der Ladeeinrichtung (30) bereitgestellten Spannung (U) zu berücksichtigen.

**4.** Verfahren nach einem der vorhergehenden Ansprüche, **dadurch gekennzeichnet, dass** der Ladestrom (I) auf 0 geregelt wird, wenn die an dem Anschluss (22) gemessene Spannung (U) unterhalb eines vorbestimmten Spannungsschwellenwerts fällt.

**5.** Verfahren nach einem der vorhergehenden Ansprüche,
**dadurch gekennzeichnet,**
**dass** ein Strompuls (16) des Ladestroms (I) erzeugt wird,
**dass** während der Strompuls (16) fließt ein Verlauf der Spannung (U) an dem Anschluss (22) erfasst wird,
**dass** abhängig von dem Verlauf der Spannung (U) und dem Strompuls (16) ein Leitungswiderstand bestimmt wird, und
**dass** der Ladestrom (I) abhängig von dem Leitungswiderstand geregelt wird.

**6.** Vorrichtung zum Laden eines Energiespeichers (21) eines Fahrzeugs (10) über eine Ladeeinrichtung (30) mit dem Verfahren nach einem der vorhergehenden Ansprüche,
wobei die Vorrichtung (20) Steuermittel (23), einen Spannungsmesser (24) und einen Stromregler (25) umfasst,
wobei der Spannungsmesser (24) ausgestaltet ist, eine von der Ladeeinrichtung (30) bereitgestellte Spannung (U) an einem Anschluss (22) des Fahrzeugs (10) zu messen,
wobei die Steuermittel (23) und der Stromregler (25) ausgestaltet sind, um einen Ladestrom (I), welcher von der Ladeeinrichtung (30) bereitgestellt wird und den Energiespeicher (21) lädt, abhängig von der gemessenen Spannung (U) auf ein Optimum zu regeln, um eine Verlustleistung, welche sich aufgrund des Ladens bei der Ladeeinrichtung (30) nd/oder im Fahrzeug (10) ergibt, beim Laden zu beschränken, **dadurch gekennzeichnet**, die Vorrichtung (20) ausgestaltet ist, um die Spannung (U) an dem Anschluss (22) des Fahrzeugs (10) im unbelasteten Zustand der Ladeeinrichtung (30) als Ruhespannung zu messen, wobei im unbelasteten Zustand der Ladeeinrichtung (30) der Ladestrom (I) gleich Null ist, und um den Ladestrom (I) beim Laden abhängig von einer Differenz (dU) aus der Ruhespannung und der beim Laden aktuell an dem Anschluss (22) des Fahrzeugs (10) gemessenen Spannung (U) zu regeln, und
wobei die Vorrichtung (20) ausgestaltet ist, um den Ladestrom (I) beim Laden derart zu regeln, dass ein Verhältnis aus der Differenz (dU) und der Ruhespannung in einem Bereich von 1% bis 5% gehalten wird.

**7.** Fahreugmit einer Vorrichtung (20) nach Anspruch 6

**Claims**

**1.** Method for charging an energy store (21) of a vehicle (10) using a charging apparatus (30),
wherein a voltage (U) provided by the charging apparatus (30) is measured at a port (22) of the vehicle (10), wherein a charging current (I) that is provided by the charging apparatus (30) and charges the energy store (21) is regulated to an optimum depending on the voltage (U) in order to limit power losses that occur during charging at the charging apparatus (30) and/or in the vehicle (10) due to the charging,
**characterized in that** the voltage (U) at the port (22) of the vehicle (10) is measured as quiescent voltage in the unloaded state of the charging apparatus (30), wherein the charging current (I) is equal to zero in the unloaded state of the charging apparatus (30),
wherein the charging current (I) is regulated during charging depending on a difference (dU) between the quiescent voltage and the voltage (U) currently measured at the port (22) of the vehicle (10) during charging, and wherein the charging current (I) is regulated during charging so as to keep a ratio of the difference (dU) and the quiescent voltage in a range from 1% to 5%.

**2.** Method according to Claim 1, **characterized in that** the voltage measured at the port (22) is an AC voltage (U).

**3.** Method according to Claim 1 or 2, **characterized in that** the measurement of the quiescent voltage is repeated at predetermined time intervals in order to take into account fluctuations in the voltage (U) provided by the charging apparatus (30).

**4.** Method according to one of the preceding claims, **characterized in that** the charging current (I) is regulated to 0 when the voltage (U) measured at the port (22) drops below a predetermined voltage threshold value.

**5.** Method according to one of the preceding claims, **characterized
in that** a current pulse (16) of the charging current (I) is generated,

**in that** a profile of the voltage (U) at the port (22) is recorded while the current pulse (16) is flowing,
**in that** a line resistance is determined depending on the profile of the voltage (U) and the current pulse (16), and
**in that** the charging current (I) is regulated depending on the line resistance.

6. Device for charging an energy store (21) of a vehicle (10) using a charging apparatus (30), by way of the method according to one of the preceding claims,
wherein the device (20) comprises control means (23), a voltmeter (24) and a current controller (25),
wherein the voltmeter (24) is designed to measure a voltage (U) provided by the charging apparatus (30) at a port (22) of the vehicle (10),
wherein the control means (23) and the current controller (25) are designed to regulate a charging current (I) that is provided by the charging apparatus (30) and charges the energy store (21) to an optimum depending on the measured voltage (U) in order to limit power losses that occur during charging at the charging apparatus (30) and/or in the vehicle (10) due to the charging, **characterized in that**
the device (20) is designed to measure the voltage (U) at the port (22) of the vehicle (10) as quiescent voltage in the unloaded state of the charging apparatus (30), wherein the charging current (I) is equal to zero in the unloaded state of the charging apparatus (30), and to regulate the charging current (I) during charging depending on a difference (dU) between the quiescent voltage and the voltage (U) currently measured at the port (22) of the vehicle (10) during charging, and wherein the device (20) is designed to regulate the charging current (I) during charging so as to keep a ratio of the difference (dU) and the quiescent voltage in a range from 1% to 5%.

7. Vehicle having a device (20) according to Claim 6.


**Revendications**

1. Procédé permettant de charger un accumulateur d'énergie (21) d'un véhicule (10) par l'intermédiaire d'un dispositif de chargement (30),
dans lequel une tension (U) fournie par le dispositif de chargement (30) est mesurée au niveau d'un branchement (22) du véhicule (10),
dans lequel un courant de charge (I) qui est fourni par le dispositif de chargement (30) et qui charge l'accumulateur d'énergie (21) est régulé sur une valeur optimale en fonction de la tension (U) afin de limiter la puissance dissipée résultant en raison du chargement au niveau du dispositif de chargement (30) et/ou dans le véhicule (10),
**caractérisé en ce que** la tension (U) au niveau du branchement (22) du véhicule (10) est mesurée à l'état non chargé du dispositif de chargement (30) en tant que tension de repos, le courant de charge (I) étant égal à zéro à l'état non chargé du dispositif de chargement (30),
dans lequel le courant de charge (I) est régulé lors du chargement en fonction d'une différence (dU) entre la tension de repos et la tension (U) mesurée lors du chargement actuel au niveau du branchement (22) du véhicule (10), et
dans lequel le courant de charge (I) est régulé lors du chargement pour maintenir un rapport entre la différence (dU) et la tension de repos dans une plage de 1 % à 5 %.

2. Procédé selon la revendication 1, **caractérisé en ce que** la tension mesurée au niveau du branchement (22) est une tension alternative (U).

3. Procédé selon la revendication 1 ou 2, **caractérisé en ce que** la mesure de la tension de repos est répétée à des intervalles de temps prédéterminés pour tenir compte de variations de la tension (U) fournie par le dispositif de chargement (30).

4. Procédé selon l'une quelconque des revendications précédentes, **caractérisé en ce que** le courant de charge (I) est régulé sur 0 si la tension (U) mesurée au niveau du branchement (22) descend au-dessous d'une valeur seuil de tension prédéterminée.

5. Procédé selon l'une quelconque des revendications précédentes, **caractérisé en ce que**
une impulsion de courant (16) du courant de charge (I) est générée,
pendant que l'impulsion de courant (16) circule, une courbe de la tension (U) est détectée au niveau du branchement (22),
une résistance de ligne est déterminée en fonction de la courbe de la tension (U) et de l'impulsion de courant (16), et
le courant de charge (I) est régulé en fonction de la résistance de ligne.

6. Dispositif permettant de charger un accumulateur d'énergie (21) d'un véhicule (10) par l'intermédiaire d'un dispositif de chargement (30) à l'aide du procédé selon l'une quelconque des revendications précédentes, dans lequel le dispositif (20) comprend des moyens de commande (23), un voltmètre (24) et un régulateur de courant(25), dans lequel le voltmètre (24) est configuré pour mesurer une tension (U) fournie par le dispositif de chargement (30) au niveau d'un branchement (22) du véhicule (10), dans lequel les moyens de commande (23) et le régulateur de courant (25) sont configurés pour réguler un courant de charge (I), qui est fourni par le dispositif de chargement (30) et qui charge l'accumulateur d'énergie (21), sur une valeur optimale en fonction de la tension (U) mesurée afin de limiter une puissance dissipée résultant en raison du chargement au niveau du dispositif de chargement (30) et/ou dans le véhicule (10), **caractérisé en ce que** le dispositif (20) est configuré pour mesurer la tension (U) au niveau du branchement (22) du véhicule (10) à l'état non chargé du dispositif de chargement (30) en tant que tension de repos, le courant de charge (I) étant égal à zéro à l'état non chargé du dispositif de chargement (30), et pour réguler le courant de charge (I) lors du chargement en fonction d'une différence (dU) entre la tension de repos et la tension (U) mesurée lors du chargement actuel au niveau du branchement (22) du véhicule (10), et dans lequel le dispositif (20) est configuré pour réguler le courant de charge (I) lors du chargement de telle sorte qu'un rapport entre la différence (dU) et la tension de repos soit maintenu dans une plage de 1 % à 5 %.

7. Véhicule comprenant un dispositif (20) selon la revendication 6.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2011163716 A1
- EP 2309617 A1
- CA 2648972 A1
- DE 19521962 A1
- US 20080007202 A1
- US 20040169489 A1
- DE 102005011081 A1
- DE 3528476 A1